# EUROPEAN PATENT APPLICATION

(11) **EP 4 411 315 A1**
(43) Date of publication of application: **07.08.2024**
(21) Application number: 21959590.7
(22) Date of filing: 08.12.2021
(51) Int. Cl.: G01B 11/16, G01B 11/24

(54) **DEVICE FOR MEASURING BENDING OF AN ELONGATE VERTICALLY ORIENTED CHANNEL**

(30) Priority: 29.09.2021 RU 2021128441
(71) Applicant: Joint Stock Company "Rosenergoatom", Moscow 109507 (RU); Joint Stock Company "N.A. Dollezhal Research and Development Institute of Power Engineering, Moscow 107140 (RU); Science and Innovations - Nuclear Industry Scientific Development, Private Enterprise, Moscow, 119017 (RU); Obschestvo s Ogranichennoy Otvetstvennost'Yu "Prolog", Kaluzhskaya oblast', g. Obninsk, 249033 (RU)
(72) Inventor: FEDOROV, Artyom Nikolaevich, g. Obninsk 249034 (RU); PODOSINNIKOV, Alexandr Alexandrovich, Moscow (p. Moskovskiy) 108811 (RU); STEPANOV, Maksim Alekseevich, g. Obninsk 249034 (RU)
(74) Representative: Osmans, Voldemars
(86) International application number: PCT/RU2021/000551
(87) International publication number: WO 2023/055252

(57) **Abstract**

The invention relates to measuring technique, namely to equipment for measuring bending of extended vertically directed channels, including nuclear reactor fuel channels of the high-power channel-type reactor (HPCR). The technical result is to simplify the manufacture of the device while maintaining the accuracy of measuring bending of the channel, including a nuclear reactor fuel channel. The device contains a flexible hollow carrier rod equipped with at least one fibre-optic sensor equipped with a core closed by a sealed tubular casing. The upper part of the core is made in the form of a mounting sleeve with a central cylindrical cavity. The lower part of the core is made in the form of a central cylindrical rod. Longitudinal sector cuts are made on the central rod of the core, in which ferrules with longitudinal through channels are fixed, and a gravity pendulum is placed under the lower end of the central rod of the core. Through the through channels of the ferrules, fiber-optic lines are drawn, connecting each fibre-optic sensor with a tunable laser and a photoreceiver connected to a computer. The cavity of the sealed tubular casing of the fibre-optic sensor is filled with an inert gas.

## Description

### TECHNICAL FIELD OF THE INVENTION

The invention relates to measuring technique, namely to equipment for measuring bending of extended vertically directed channels, including nuclear reactor fuel channels of the high-power channel-type reactor (HPCR).

### PRIOR ART

The closest in terms of the set of essential features to the claimed invention for measuring bending of an extended vertically directed channel is a device for measuring bending of a HPCR fuel channel, comprising a carrying element equipped with fiber-optic sensors (patent RU 2626301, publication date 25.07.2017, IPC G01B 5/20).

The known device for measuring bending of a nuclear reactor fuel channel uses fibre-optic strain sensors, which are Bragg gratings embedded at several levels in the structure of radiation-resistant quartz optical fibre. The carrying element is made in the form of a flexible hollow carrier rod, and fibre-optic strain sensors are located along the perimeter of its inner surface.

The disadvantage of the known device for measuring bending of a HPCR fuel channel is a complex and labor-intensive technology of manufacturing a fibre-optic strain sensor, associated with technically complex implementation of microscopic points with a changed refractive index in radiation-resistant quartz optical fiber, forming a Bragg grating.

### SUMMARY OF THE INVENTION

The problem to be solved by the present invention is the creation of a device for measuring bending of a vertically directed channel, which makes it possible to exclude a complex and labor-intensive technological operation of making microscopic points with a changed refractive index in radiation-resistant quartz optical fiber, forming a Bragg grating, while maintaining the possibility of obtaining reliable information about changes in the geometric parameters of the channel, including the HPCR fuel channel, during its operation.

The technical result of the present invention is to simplify the manufacture of a device for measuring bending of an extended vertically directed channel while maintaining the accuracy of measuring bending of the channel, including the nuclear reactor fuel channel.

The specified technical result is achieved by the fact that a device for measuring bending of an extended vertically directed channel contains a flexible hollow carrier rod equipped with at least one fibre-optic sensor, and according to the claimed invention the fiber-optic sensor is equipped with a core closed by a sealed tubular casing. The upper part of the core is made in the form of a mounting sleeve with a central cylindrical cavity rigidly fixed at the lower end of the flexible hollow carrier rod, the lower part of the core is made in the form of a central cylindrical rod coaxial to the mounting sleeve, in the lower part of the central cavity of the core installation sleeve around the outer diameter of the central core rod, through holes are made for installing fibre-optic lines, longitudinal sector cuts are made on the central rod 9 of the core, in which ferrules congruent to these cuts with longitudinal through channels are fixed, and a gravity pendulum is placed under the lower end of the central rod of the core, with the possibility of deviation from the longitudinal axis, connected by means of a flexible suspension to the central rod of the core and installed to form a gap between the upper end of the gravity pendulum facing each other and the lower surface of the ferrules, fibre-optic lines connecting each fibre-optic sensor with a tunable laser and photoreceiver connected to a computer are drawn through the longitudinal through channels of the ferrules, through holes and the central cavity of the mounting sleeve of the core and the flexible hollow carrier rod, wherein the ends of the lower ends of the fiber optic lines are set in the same plane as the lower surface of the ferrules, and the cavity of the sealed tubular casing of the fibre-optic sensor is filled with inert gas.

Advantageously, the device for measuring bending of an extended vertically directed channel may be equipped with a primary information processing unit, the input of which is electrically connected to a photoreceiver and the output of which is connected to a computer.

Also, the sealed tubular casing of the device for measuring bending of an extended vertically directed channel may be equipped with a cover sealed at its lower free end.

The flexible suspension connecting the gravity pendulum with the central core rod can be made in the form of a core collar formed by thinning the cross-section of the core to provide the possibility of deflection of the gravity pendulum from the longitudinal axis of the core due to gravity within the zone of elastic deformations of the core collar material.

The proposed technical solution, a device for measuring bending of an extended vertically directed channel, is explained by an example of a specific embodiment described below. The example presented is not the only possible one, but clearly demonstrates the possibility of achieving the claimed technical result with the given totality of essential features of the invention.

### LIST OF FIGURES, DRAWINGS, AND OTHER MATERIALS

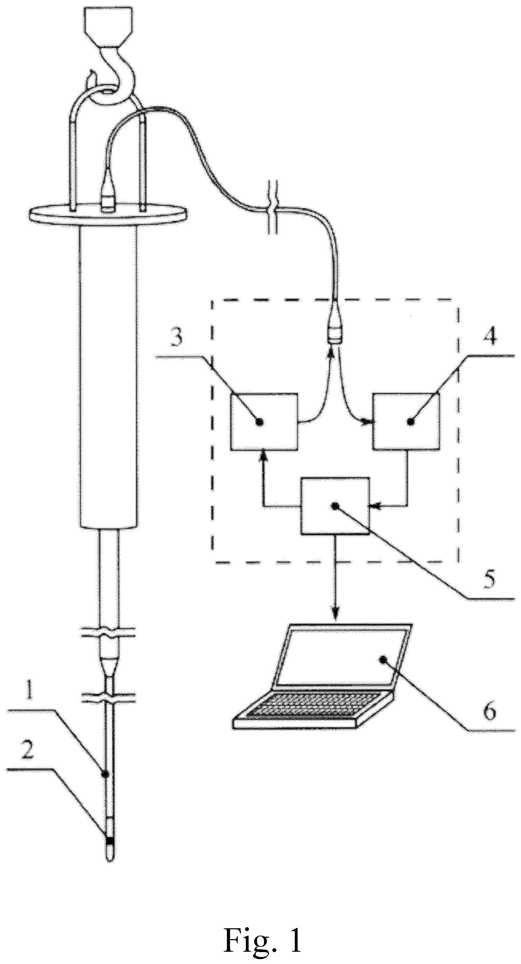

The essence of the present invention is illustrated by drawings, wherein
FIG. 1 shows a general schematic of a device for measuring bending of an extended vertically directed channel,

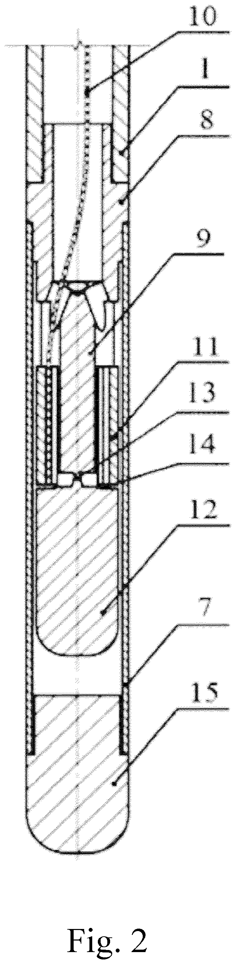

FIG. 2 shows a general view of a fibre-optic sensor,

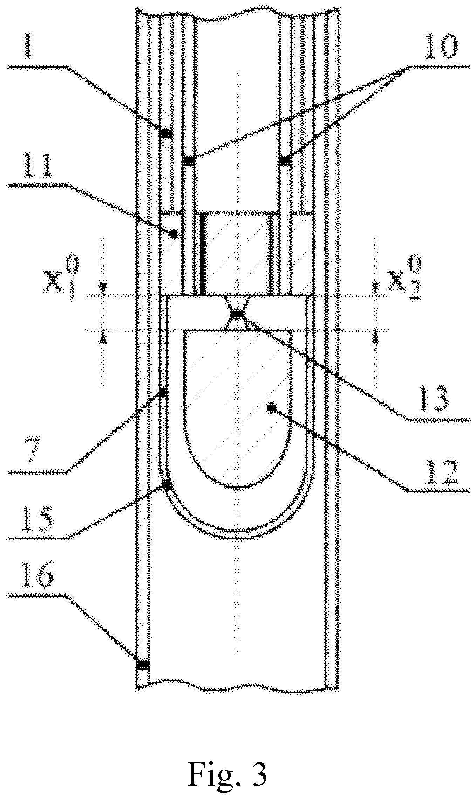

FIG. 3 shows a schematic arrangement of a fibre-optic sensor inside the straight central tube of a nuclear reactor fuel assembly,
FIG. 4 shows a schematic arrangement of a fibre-optic sensor inside the central tube of a fuel assembly with bending.

### DETAILS CONFIRMING THE FEASIBILITY OF EMBODIMENT OF THE INVENTION

The device for measuring bending of an extended vertically directed channel contains a flexible hollow carrier rod 1 and at least one fiber-optic sensor 2 mounted on the lower end of the flexible hollow carrier rod 1 and connected by fibre-optic lines to a tunable laser 3 and a photoreceiver 4, which are connected to a computer 6 via a primary information processing unit 5. The fibre-optic sensor 2 contains a core closed by a sealed tubular casing 7.

The upper part of the core is made in the form of a mounting sleeve 8 rigidly fixed at the lower end of the flexible hollow carrier rod 1. The mounting sleeve 8 has a central cylindrical cavity.

The lower part of the core is made in the form of a central rod 9 coaxial to the mounting sleeve 8. In the lower part of the central cavity of the core installation sleeve 8 around the outer diameter of the central core rod 9, through holes are made for installing fibre-optic lines 10.

Longitudinal sector cuts are made on the central rod 9 of the core, in which ferrules 11 congruent to these cuts with longitudinal through channels are fixed. A gravity pendulum 12 is placed under the lower end of the central rod 9 of the core, with the possibility of deviation from the longitudinal axis, connected by means of a flexible suspension 13 to the central rod 9 of the core and installed to form a gap 14 between the upper end of the gravity pendulum 12 facing each other and the lower surface of the ferrules 11.

Fibre-optic lines 10 connecting each fibre-optic sensor 2 with a tunable laser 3 and photoreceiver 4 connected to a computer 6 are drawn through the longitudinal through channels of the ferrules 11, through holes and the central cavity of the mounting sleeve 8 of the core and the flexible hollow carrier rod 1.

To ensure operation of the fiber optic sensor, the ends of the lower ends of the fiber optic lines 10 are set in the same plane as the lower surface of the ferrules 11, and the cavity of the sealed tubular casing 7 of the fibre-optic sensor 2 is filled with inert gas, which provides protection and preservation of the sensor from environmental influences, and thus affects the accuracy of the measurement.

The sealed tubular casing 7 may, in one embodiment, be equipped with a cover 15 sealed and fixed at its lower free end.

According to one embodiment, the gravity pendulum 12 may be mounted to the lower end of the central rod 9 by means of a flexible suspension 13 made, for example, of polyamide materials.

According to other embodiment, the core and the pendulum 12 may be made of a single workpiece, with a collar in the lower part of the central rod 9, which forms the flexible suspension 13 by thinning its cross-section. The size of the gap 14 formed between the lower end of the ferrules 11 and the upper end of the gravity pendulum 12 does not exceed 0.5 mm, which limits the deflection angle of the gravity pendulum 12. In this case, the core collar, which is an embodiment of the flexible suspension 13, at deviations of the gravity pendulum from the geometric axis of the core operates in the zone of elastic deformations, which ensures the operability of the device.

The operation of the device is illustrated by an example of measuring bending of a nuclear reactor fuel channel.

The carrying element 1 is set in its original position: the flexible hollow carrier rod 1 is completely lowered into the central tube 16 of the fuel assembly. Bending is measured by lifting the flexible hollow carrier rod 1 with the fiber-optic sensor 2 fixed at its lower end in the central tube 16 of the fuel assembly, wherein a light signal from the tunable laser 3 is supplied to the fibre-optic sensor 2 via fibre-optic lines 10, and the signal reflected by the gravity pendulum 12 of the fibre-optic sensor 2 is received by the photoreceiver 4.

In the presence of bending of the nuclear reactor fuel channel and, accordingly, bending of the central tube 16 of the fuel assembly, the flexible hollow carrier rod 1 is passed along the bended central tube 16 of the fuel assembly, wherein the geometric axis of the fibre-optic sensor 2 and its core deviates from the vertical, and the gravity pendulum 12 of the fibre-optic sensor 2 under the influence of gravity and due to the flexible element 13 is deflected by an angle proportional to the angle of deflection of the geometric axis of the fibre-optic sensor 2 from the gravity vector.

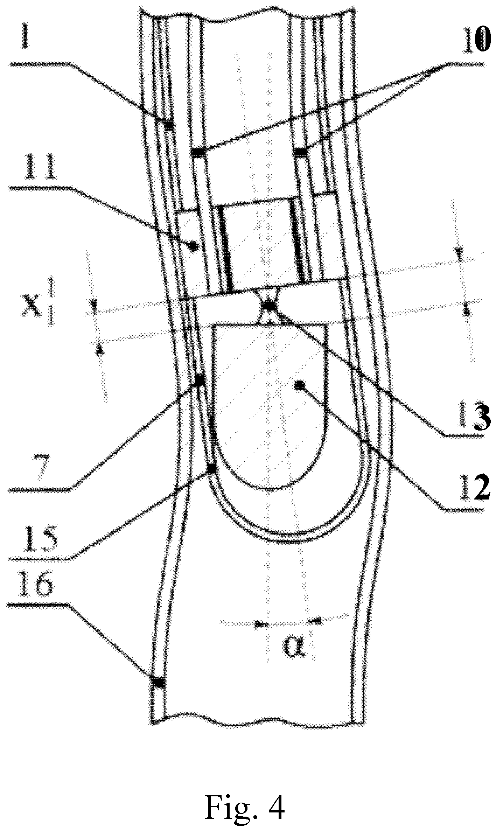

When the flexible hollow carrier rod 1 is lifted, the geometric axis of the fibre-optic sensor 2 deviates relative to the gravity vector and, as a consequence, the lower surface of the ferrules 11 deviates relative to the gravity pendulum 12 (angle α in Fig. 4) tending to take a vertical position when the fibre-optical sensor 2 is tilted. As a result of the deviation of the ferrules 11 relative to the pendulum 12, the geometric parameters of the gas gap 14 change, namely, the distances between the reflective surface of the gravity pendulum 12 and the bottom ends of the fibre-optic lines 10 located in the longitudinal through channels of the ferrules 11 (the size of the gap X₁¹ ≠ X₂¹ in Fig. 4) change, which causes a shift in the interference pattern of the reflected light signal (beam), which is recorded by means of the photoreceiver 4 and analyzed using specialized software installed on the computer 6. As a result of the measurements, profilograms of the gas gap 14 are recorded for each fibre-optic line 10. On the basis of the obtained profilograms of the gap 14, profilograms of the magnitude and direction of deflection of the central tube 16 of the fuel assembly from the vertical axis are calculated, and then the magnitude and direction of bending of the nuclear reactor fuel channel are calculated.

The conducted tests of the device operation showed high accuracy of measurements using the proposed device.

The proposed device can be used to control the presence and measure bending (curvature) of long vertically directed channels and pipes in various industries, as well as to measure bending of nuclear reactor fuel channels, including of the HPCR reactor.

The use of the proposed device makes it possible to detect the presence and measure bending of the central tube of the fuel assembly with the required accuracy and, on its basis, to determine bending of a nuclear reactor fuel channel.

## Claims

1. A device for measuring bending of an extended vertically directed channel, containing a flexible hollow carrier rod equipped with at least one fibre-optic sensor, **characterized in that** the fiber-optic sensor is equipped with a core closed by a sealed tubular casing, the upper part of the core is made in the form of a mounting sleeve with a central cylindrical cavity rigidly fixed at the lower end of the flexible hollow carrier rod, the lower part of the core is made in the form of a central cylindrical rod coaxial to the mounting sleeve, in the lower part of the central cavity of the core installation sleeve around the outer diameter of the central core rod, through holes are made for installing fibre-optic lines, longitudinal sector cuts are made on the central rod 9 of the core, in which ferrules congruent to these cuts with longitudinal through channels are fixed, and a gravity pendulum is placed under the lower end of the central rod of the core, with the possibility of deviation from the longitudinal axis, connected by means of a flexible suspension to the central rod of the core and installed to form a gap between the upper end of the gravity pendulum facing each other and the lower surface of the ferrules, fibre-optic lines connecting each fibre-optic sensor with a tunable laser and photoreceiver connected to a computer are drawn through the longitudinal through channels of the ferrules, through holes and the central cavity of the mounting sleeve of the core and the flexible hollow carrier rod, wherein the ends of the lower ends of the fiber optic lines are set in the same plane as the lower surface of the ferrules, and the cavity of the sealed tubular casing of the fibre-optic sensor is filled with inert gas.

2. A device according to claim 1, **characterized in that** it is equipped with a primary information processing unit, the input of which is electrically connected to the photoreceiver, and the output of which is connected to the computer.

3. A device according to claim 1, **characterized in that** that the sealed tubular casing is equipped with a cover sealed on its lower free end.

4. A device according to claim 1, **characterized in that** the flexible suspension connecting the gravity pendulum with the central rod of the core is made in the form of a core collar formed by thinning the cross-section of the core to provide the possibility of deflection of the gravity pendulum from the longitudinal axis of the core.
